Europäisches Patentamt

European Patent Office

Office européen des brevets

(11) Veröffentlichungsnummer: **0 238 834**
**A1**

(12) **EUROPÄISCHE PATENTANMELDUNG**

(21) Anmeldenummer: **87102073.1**

(22) Anmeldetag: **13.02.87**

(51) Int. Cl.⁴: **H 04 Q 3/52,** H 03 K 17/693

(30) Priorität: **14.02.86 DE 3604605**

(43) Veröffentlichungstag der Anmeldung: **30.09.87**
**Patentblatt 87/40**

(84) Benannte Vertragsstaaten: **AT BE CH DE ES FR GB GR IT LI NL SE**

(71) Anmelder: **Siemens Aktiengesellschaft Berlin und München, Wittelsbacherplatz 2, D-8000 München 2 (DE)**

(72) Erfinder: **Trumpp, Gerhard, Dipl.-Ing, Mittlängstrasse 7, D-8039 Puchheim (DE)**

(54) **Breitbandsignal-Raumkoppeleinrichtung.**

(57) In einer Breitbandsignal-Raumkoppeleinrichtung mit einer Koppelpunktmatrix in FET-Technik, deren Koppelelemente (Kij) jeweils von einer in zwei Koordinaten decodergesteuerten koppelpunktindividuellen Speicherzelle (Hij) gesteuert werden, ist die Speicherzelle durch einen n-Kanal-Transistor (Tnh) und zwei kreuzgekoppelte Inverterschaltungen gebildet, deren eine eingangsseitig mit dem zugehörigen Decoderausgang des einen Ansteuerdecoders (DY) über einen n-Kanal-Transistor (Tnh) verbunden ist, der seinerseits an seiner Steuerelektrode mit dem entsprechenden Ausgangssignal des anderen Ansteuerdecoders (DX) beaufschlagt ist, und deren andere ausgangsseitig zum Steuereingang des zugehörigen Koppelelementes führt. Das Koppelelement ist durch einen einzigen n-Kanal-Transistor (TnK) gebildet.

0238834

Siemens Aktiengesellschaft                    86 P 1 0 6 0 E
Berlin und München

Breitbandsignal-Raumkoppeleinrichtung

Neuere Entwicklungen der Fernmeldetechnik führen zu dienste-integrierenden Nachrichtenübertragungs- u. -vermittlungs-systemen für Schmalband- und Breitband-Kommunikationsdienste, die als Übertragungsmedium im Bereich der Teilnehmeranschlußleitungen Lichtwellenleiter vorsehen, über die sowohl die Schmalbandkommunikationsdienste, wie insbesondere 64-kbit/s-Digital-Telefonie, als auch Breitbandkommunikationsdienste, wie insbesondere 140-Mbit/s-Bildtelefonie, geführt werden, wobei aber in den Vermittlungsstellen (vorzugsweise gemein-same Steuereinrichtungen aufweisende) Schmalbandsignal-Koppeleinrichtungen und Breitbandsignal-Koppeleinrichtungen nebeneinander vorgesehen sind (DE-PS 24 21 002).

Im Zusammenhang mit einer Breitbandsignal-Zeitmultiplex-Koppeleinrichtung, deren Koppelpunkte im Zeitmultiplex jeweils für eine Mehrzahl von Verbindungen genutzt werden, ist es bekannt, jeweils zwei Leitungen mit Hilfe eines Gatterelements zu verbinden, das von einer als bistabiles D-Kippglied gebildeten koppelpunktindividuellen Speicherzelle ein- und ausgeschaltet wird, wobei diese koppelpunktindividuelle Speicherzelle, deren Clock-Eingang ein entsprechendes Taktsignal zugeführt wird, in nur einer Koordinatenrichtung, und zwar an ihrem D-Eingang, angesteuert wird (Pfannschmidt: "Arbeitsgeschwindigkeitsgrenzen von Koppelnetzwerken für Breitband-Digitalsignale", Diss., Braunschweig 1978, Bild 6.7, ferner Bild 6.4). In Anbetracht eines bei einer Bitrate von 140 Mbit/s erreichbaren Zeitmultiplexfaktors von etwa 4 bis 8 und der dabei erforderlichen aufwendigen Schaltungstechnologie werden derzeit allerdings zur Vermittlung von Breitbandsignalen reine Raum-

0238834

- 2a -

koppeleinrichtungen bevorzugt, in denen die über die einzelnen Koppelpunkte durchgeschalteten Verbindungen allein räumlich voneinander getrennt sind.

Eine reine Breitbandsignal-Raumkoppelanordnung kann als mit Eingangsverstärkern und Ausgangsverstärkern versehene Koppelpunktmatrix in C-MOS-Technik ausgebildet sein, in deren Koppelpunkten die Koppelelemente jeweils von einer decodergesteuerten, koppelpunktindividuellen Halte-Speicherzelle gesteuert werden, wobei die Koppelelemente jeweils als C-MOS-Transfergate (C-MOS-Transmissionsgate) ausgebildet sind (ISS'84 Conference Papers 23C1, Fig.9); die koppelpunktindividuellen Halte-Speicherzellen eines reinen Raumkoppelvielfachs können von einem Zeilendecoder und von einem Spaltendecoder her jeweils über eine zeilen- bzw. spaltenindividuelle Ansteuerleitung in zwei Koordinaten angesteuert werden (Pfannschmidt, a.a.O., Bild 6.4).

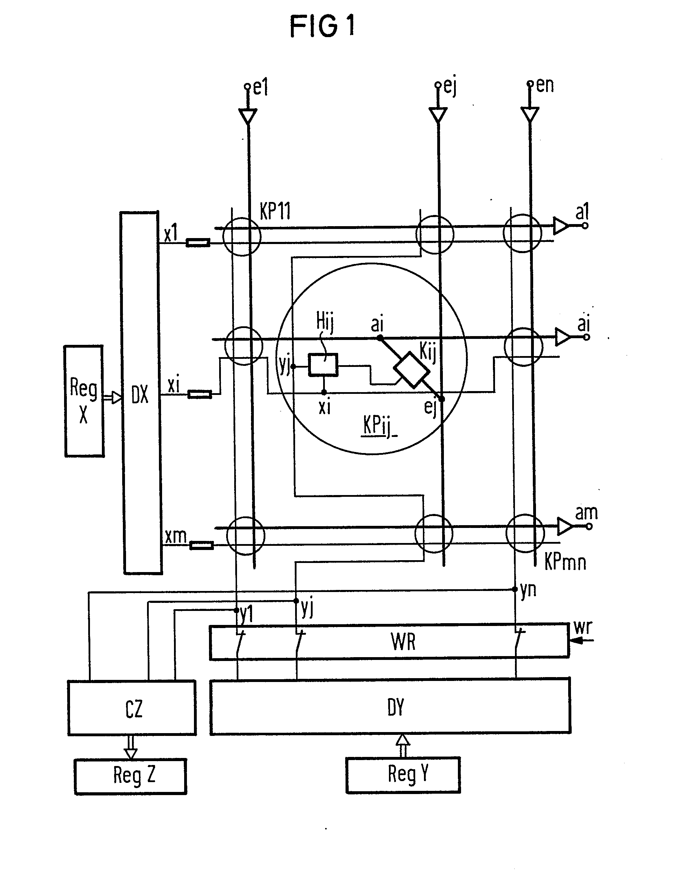

In einer Breitbandsignal-Raumkoppeleinrichtung mit Koppelelementen in FET-Technik, die jeweils mit einer eingangsseitig mit der zugehörigen Signal-Eingangsleitung verbundenen und ausgangsseitig zu der zugehörigen Signal-Ausgangsleitung führenden C-MOS-Inverterschaltung mit MOS-Transistoren vom Anreicherungstyp gebildet sind, zwischen deren p-Kanal-Anreicherungs-Transistor und die zugehörige Speisepotentialquelle ein mit seiner Steuerelektrode an den einen Ausgang der Speicherzelle angeschlossener p-Kanal-Verarmungs-Transistor eingefügt ist und zwischen deren n-Kanal-Anreicherungs-Transistor und die zugehörige Speisepotentialquelle ein mit seiner Steuerelektrode an den Komplementärausgang der Speicherzelle angeschlossener n-Kanal-Verarmungs-Transistor eingefügt ist, können diese Koppelelemente jeweils von einer koppelpunktindividuellen, mit einem n-Kanal-Transistor und zwei rückgekoppelten Invertern gebildeten Speicherzelle gesteuert sein (ISS'84 Conf. Papers 31C3, Fig.14). In einer Breitbandsignal-Raumkoppeleinrichtung mit einer Koppelpunktmatrix in FET-Technik können die Koppelelemente auch jeweils mit einem mit seiner Drain-Source-Strecke zwischen einer Matrix-Eingangsleitung und einer Matrix-Ausgangsleitung liegenden n-Kanal-Transistor (s.a. ISS'84
Conf. Papers 31.C.3,Fig.12) gebildet sein, die jeweils von
einer durch zwei Ansteuerdecoder in zwei Koordinaten angesteuerten, koppelpunktindividuellen Speicherzelle mit zwei
kreuzgekoppelten Inverterschaltungen gesteuert werden, deren
eine eingangsseitig mit dem zugehörigen invertierenden Decoderausgang des einen Ansteuerdecoders über einen ersten n-
Kanal-Transistor verbunden ist und deren andere eingangsseitig mit dem zugehörigen nichtinvertierenden Decoderausgang
desselben Ansteuerdecoders über einen zweiten n-Kanal-Transistor verbunden ist, wobei beide n-Kanal-Transistoren ihrerseits an ihrer Steuerelektrode mit dem Ausgangssignal des
zugehörigen Decoderausgangs des anderen Ansteuerdecoders
beaufschlagt sind (Rev. ECL 25(1977)1-2, 43...51, Fig.1;
IEEE J. of Solid-State Circuits 9(1974)3, 142 ...147, Fig.1;
Electronics and Communications in Japan, 53-A(1970)10, 54..
..62, Fig.5; EP-A-0 073 920, FIG.5).

Die Erfindung stellt sich nun die Aufgabe, einen Weg aufzuzeigen, wie in einer Breitband-Koppeleinrichtung die
einzelnen Koppelpunkte in besonders zweckmässiger Weise,
mit einem insgesamt noch geringeren Transistoraufwand
realisiert werden können.

An anderer Stelle (DE-P 35 33 915.2 = VPA 85P1678) wird
angegeben, daß die mit bistabilen D-Kippgliedern gebildeten
Speicherzellen von zwei jeweils mit einer Koppelpunktreihen-
Adresse und einem Adreßtaktsignal beaufschlagten Ansteuerdecodern ansteuerbar sein können, von denen jeweils der in
der einen Koordinatenrichtung (Zeilenrichtung) ansteuernde
Decoder mit seinem jeweiligen Decoderausgang an die D-
Eingänge der in der betreffenden Matrixreihe (Zeile) angeordneten D-Kippglieder geführt ist und jeweils der in der
anderen Koordinatenrichtung (Spaltenrichtung) ansteuernde
Decoder mit seinem jeweiligen Decoderausgang an die Clock-
Eingänge der in der betreffenden Matrixreihe (Spalte)
angeordneten D-Kippglieder geführt ist; dabei können die
Speicherzellen jeweils mit zwei kreuzgekoppelten C-MOS-
Inverterschaltungen gebildet sein, deren eine mit ihrem Eingang an den zugehörigen Decoderausgang des einen Ansteuerdecoders über ein C-MOS-Transfergate angeschlossen ist, das
seinerseits - ebenso wie ein in den zu diesem Eingang der
einen C-MOS-Inverterschaltung führenden Rückkopplungsweg
eingefügtes weiteres C-MOS-Transfergate - an seinem einen
Eingang mit dem Ausgangssignal des zugehörigen Decoderausgangs des anderen Ansteuerdecoders und an seinem anderen
Eingang mit dem negierten Ausgangssignal dieses Decoderausgangs beaufschlagt ist.

Die vorliegende Erfindung zeigt demgegenüber einen anderen
Weg einer konkreten Koppelpunktrealisierung mit einem besonders geringen Transistoraufwand.

Die Erfindung betrifft eine Breitbandsignal-Raumkoppeleinrichtung mit einer Koppelpunktmatrix in FET-Technik, deren
jeweils mit einem mit seiner Drain-Source-Strecke zwischen
einer Matrix-Eingangsleitung und einer Matrix-Ausgangsleitung
liegenden n-Kanal-Transistor gebildete Koppelelemente jeweils
von einer durch zwei Ansteuerdecoder (Zeilendecoder, Spaltendecoder) in zwei Koordinaten angesteuerten, koppelpunktindividuellen Speicherzelle gesteuert werden, die mit einem
n-Kanal-Transistor und zwei kreuzgekoppelten Inverterschaltungen gebildet ist, wobei eine Inverterschaltung eingangsseitig mit dem zugehörigen Decoderausgang des einen Ansteuerdecoders über den n-Kanal-Transistor verbunden ist, der seinerseits an seiner Steuerelektrode mit dem Ausgangssignal
des zugehörigen Decoderausgangs des anderen Ansteuerdecoders
beaufschlagt ist, und wobei eine Inverterschaltung ausgangsseitig zum Steuereingang des zugehörigen Koppelelements
führt; diese Raumkoppeleinrichtung ist erfindungsgemäß dadurch gekennzeichnet, daß nur eine der beiden Inverterschaltungen eingangsseitig mit einem decodergesteuerten n-Kanal-
Transistor versehen ist und zugleich nur eine der beiden
Inverterschaltungen ausgangsseitig mit der Gate-Elektrode
des jeweiligen mit seiner Drain-Source-Strecke zwischen
einer Matrix-Eingangsleitung und einer Matrix-Ausgangsleitung
liegenden n-Kanal-Transistors des Koppelelements über einen
Längswiderstand verbunden ist.

- 4 -

Die Erfindung bringt den Vorteil mit sich, in einer Koppelpunktmatrix vorgesehene, in einfacher Weise jeweils in zwei
Koordinaten anzusteuernde koppelpunktindividuelle Halte-
Speicherzellen mit einem besonders geringen Transistoraufwand
und damit - was bei einer Integration von besonderer Bedeutung ist - mit entsprechend geringem Platzbedarf und mit
entsprechend geringen Schaltungskapazitäten realisieren zu
können, wobei eine zusätzliche Reduzierung der an den das
durchzuschaltende bzw. durchgeschaltete Signal führenden
Koppelfeld-Eingangs- bzw. -Ausgangsleitungen wirksamen
Lastkapazitäten durch den den Ausgang der Halte-Speicherzelle mit der Gate-Elektrode des n-Kanal-Transistors im
Koppelelement verbindenden Längswiderstand bewirkt wird,
durch den die Ausgangskapazität der Speicherzelle vom Gate
des n-Switch-Koppelelements entkoppelt wird.

In weiterer Ausgestaltung der Erfindung kann das Koppelelement durch einen einzigen, von der Speicherzelle an
seiner Gate-Elektrode mit einem den oberen (Grenz-)Wert
eines durchzuschaltenden Signals um mehr als die Transistor-
Pinch-Off-Spannung überschreitenden Durchschaltepotential
bzw. mit einem den durch Erhöhung des unteren (Grenz-)Werts
eines durchzuschaltenden Signals um die Transistor-Pinch-
Off-Spannung sich ergebenden Pegel unterschreitenden Sperrpotential beaufschlagten n-Kanal-Transistor gebildet sein;
die Speicherzelle kann dazu vorzugsweise mit zwei kreuzgekoppelten N-MOS-Inverterschaltungen gebildet sein.

Weitere Besonderheiten der Erfindung werden aus der nachfolgenden näheren Erläuterung der Erfindung anhand der
Zeichnung ersichtlich. Dabei zeigen
FIG 1 das Schema einer Breitband-Koppeleinrichtung und
FIG 2 Einzelheiten ihrer schaltungstechnischen Realisierung
    gemäß der Erfindung;
FIG 3 zeigt Einzelheiten einer alternativen Realisierung.

In der Zeichnung FIG 1 ist schematisch in einem zum Verständnis der Erfindung erforderlichen Umfange eine Breitbandsignal-Raumkoppeleinrichtung gemäß der Erfindung skizziert. Diese Raumkoppeleinrichtung weist eine Koppelpunktmatrix mit Koppelpunkten KP11...KPij...KPmn auf, deren Koppelelemente, wie dies beim Koppelpunkt KPij für dessen Koppelelement Kij weiter ins Einzelne gehend angedeutet ist, jeweils von einer koppelpunktindividuellen Halte-Speicherzelle Hij (beim Koppelpunkt KPij) gesteuert werden, deren Ausgang s zum Steuereingang des jeweiligen Koppelelements (Kij beim Koppelpunkt KPij) führt; die Halte-Speicherzellen ... Hij... werden ihrerseits durch zwei Ansteuerdecoder, nämlich einen Zeilendecoder DX und einen Spaltendecoder DY, über entsprechende Ansteuerleitungen x1...xi...xm; y1...yj...yn in zwei Koordinaten angesteuert.

Wie dies aus FIG 1 ersichtlich ist, mögen die beiden Ansteuerdecoder DX, DY von Eingangsregistern Reg X, Reg Y her jeweils mit einer einer Matrixreihe (Zeile bzw. Spalte) von Koppelpunkten gemeinsamen Koppelpunktzeilen- bzw. Koppelpunktspalten-Adresse beaufschlagbar sein, auf die hin sie jeweils an der der jeweiligen Koppelpunktreihen-Adresse entsprechenden Ansteuerleitung jeweils ein "1"-Ansteuersignal abgeben.

Das Zusammentreffen eines Zeilenansteuersignals "1" und eines Spaltenansteuersignals "1" am Kreuzungspunkt der betreffenden Matrixzeile mit der betreffenden Matrixspalte beim Aufbau einer entsprechenden Verbindung bewirkt dann eine Aktivierung der dort befindlichen Halte-Speicherzelle, beispielsweise der Halte-Speicherzelle Hij, mit der Folge, daß das von der betreffenden Halte-Speicherzelle (Hij) gesteuerte Koppelelement, im Beispiel das Koppelelement Kij, leitend wird.

Damit das im Beispiel betrachtete Koppelelement Kij bei einem Abbau der betreffenden Verbindung wieder gesperrt wird, wird wiederum der Ansteuerdecoder DX vom Eingangsregister Reg X mit der betreffenden Zeilenadresse beaufschlagt, so daß der Zeilendecoder DX wiederum auf seiner Ausgangsleitung xi ein Zeilenansteuersignal "1" abgibt, und zugleich wird der Spaltendecoder DY von seinem Eingangsregister Reg Y her beispielsweise mit einer Leeradresse oder mit der Adresse einer Spalte von unbeschalteten Koppelpunkten beaufschlagt, so daß er auf seiner Ausgangsleitung yj ein Spaltenansteuersignal "0" abgibt; das Zusammentreffen von Zeilenansteuersignal "1" und Spaltenansteuersignal "0" bewirkt dann die Rücksetzung der Halte-Speicherzelle Hij mit der Folge, daß das von ihr gesteuerte Koppelelement Kij gesperrt wird.

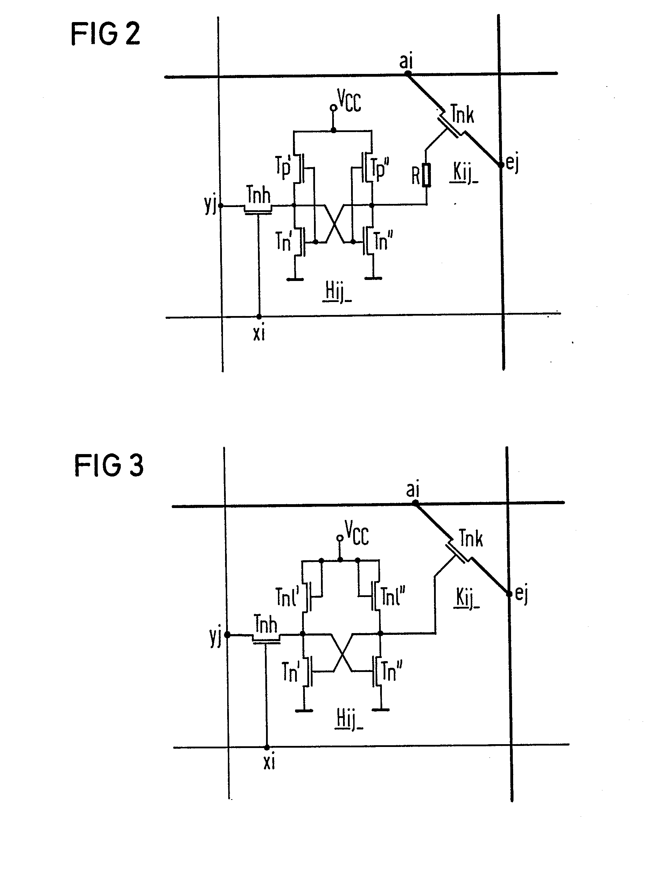

Wie dies aus FIG 2 und FIG 3 näher ersichtlich wird, ist die durch die beiden Ansteuerdecoder (Zeilendecoder DX und Spaltendecoder DY in FIG 1) in zwei Koordinaten angesteuerte Speicherzelle Hij durch einen n-Kanal-Transistor Tnh und zwei kreuzgekoppelte Inverterschaltungen Tn', Tp'; Tn", Tp" (in FIG 2) bzw. Tn', Tnl'; Tn", Tnl" (in FIG 3) gebildet, deren eine eingangsseitig mit dem zugehörigen Decoderausgang yj des einen Ansteuerdecoders (DY in FIG 1) über den n-Kanal-Transistor Tnh verbunden ist, der seinerseits an seiner Steuerelektrode mit dem Ausgangssignal des zugehörigen Decoderausgangs xi des anderen Ansteuerdecoders (DX in FIG 1) beaufschlagt ist, während die andere der beiden kreuzgekoppelten Inverterschaltungen ausgangsseitig zum Steuereingang des zugehörigen Koppelelements Kij führt. Dabei ist in der Schaltungsanordnung gemäß FIG 2 die Speicherzelle Hij mit zwei kreuzgekoppelten C-MOS-Inverterschaltungen Tn', Tp'; Tn", Tp" gebildet; gemäß FIG 3 ist die Speicherzelle Hij jeweils mit zwei kreuzgekoppelten n-Kanal-Inverterschaltungen Tn', Tnl'; Tn", Tnl" gebildet.

0238834

86 P 1 0 6 0 E

Das Koppelelement Kij ist jeweils durch einen einzigen n-Kanal-Transistor Tnk gebildet, der an der Gate-Elektrode mit einem den oberen (Grenz-)Wert eines zwischen Eingangsleitung ej und Ausgangsleitung ai durchzuschaltenden Signals um mehr als die Transistor-Pinch-Off-Spannung überschreitenden Durchschaltepotential ("H"-Pegel) bzw. mit einem den durch Erhöhung des unteren (Grenz-)Werts eines zwischen Eingangsleitung ej und Ausgangsleitung ai durchzuschaltenden Signals um die Transistor-Pinch-Off-Spannung gegebenen Pegel unterschreitenden Sperrpotential ("L"-Pegel) beaufschlagt wird. Dabei kann, wie dies auch aus FIG 2 ersichtlich ist, der Steuerausgang der Halte-Speicherzelle Hij über einen Längswiderstand R mit der Gate-Elektrode des das Koppelelement Kij bildenden n-Kanal-Transistors Tnk verbunden sein, um so die Ausgangskapazität der Halte-Speicherzelle Hij von der Gate Elektrode des n-Kanal-Transistors Tnk zu entkoppeln und damit die Lastkapazitäten an den Signalleitungen ej und ai möglichst klein zu halten.

Geschlossen (leitend gemacht) wird der n-Kanal-Transistor-Schalter Kij, indem von der Halte-Speicherzelle Hij her an die Gate-Elektrode des n-Kanal-Transistors Tnk das "H"-Steuerpotential (Durchschaltepotential) angelegt wird, das den oberen (Grenz-)Wert des durchzuschaltenden Signals um mehr als die Transistor-Pinch-Off-Spannung von beispielsweise etwa 0,7 V überschreitet; geöffnet (nichtleitend gemacht) wird der n-Kanal-Transistor-Schalter Kij, indem an die Gate-Elektrode des n-Kanal-Transistors Tnk das "L"-Steuerpotential (Sperrpotential) angelegt wird, das einen um die Transistor-Pinch-Off-Spannung von ca. 0,7 V oberhalb des unteren (Grenz-)Wertes eines durchzuschaltenden Signals liegenden Pegel unterschreitet. Um unerwünschte Zwischenzustände zu vermeiden, sollten die angegebenen Potentialgrenzen deutlich über- bzw. unterschritten werden; wenn also beispielsweise der Pegel des zwischen Eingangsleitung ej und Ausgangsleitung ai durchzuschaltenden Signals die

- 8a -

(Grenz-)Werte 0 V und 3 V aufweist, so kann der n-Kanal-
Transistor Tnk zweckmäßigerweise mit einem Sperrpotential
von 0 V gesperrt und mit einem Durchschaltepotential von
4,2 V durchgeschaltet werden.

Zum Schliessen des n-Kanal-Transistor-Schalters Kij wird die
Halte-Speicherzelle Hij über die Zeilenansteuerleitung xi
mit einem den n-Kanal-Transistor Tnh leitend machenden ("1"-)
Ansteuersignal "H" und über die Spaltenansteuerleitung yj
mit einem ("1"-)Ansteuersignal "L" beaufschlagt; dies hat zur
Folge, daß in den zwei kreuzgekoppelten Inverterschaltungen
der Transistor Tn" in den Sperrzustand und der Transistor Tn'
in den Leitzustand gelangen, so daß an der Gate-Elektrode
des n-Kanal-Transistors Tnk das Inverter-Speisepotential $V_{cc}$
von beispielsweise 4,5 V wirksam wird und der n-Kanal-
Transistor Tnk leitend wird.

Dabei ist in der in C-MOS-Technik ausgeführten Halte-Speicherzelle Hij gemäß FIG 2 der Transistor Tp" ständig im Zustand
hoher Leitfähigkeit, während in der in N-MOS-Technik ausgeführten Halte-Speicherzelle Hij gemäß FIG 3 der Lasttransistor
Tnl" nur so lange einen niedrigen Widerstand aufweist, wie die
an ihm wirksame Gate-Source-Spannung größer als die Transistor-
Schwellspannung (Pinch-off-Spannung) ist, was sich entsprechend auf die Signaldurchschaltung zwischen Eingangsleitung
ej und Ausgangsleitung ai auswirkt:
Bei Durchschaltung eines seinen unteren (Grenz-)Wert aufweisenden Nutzsignals wird zunächst der Gate-Anschluß des n-
Kanal-Transistors Tnk über den Transistor Tp" (in FIG 2) bzw.
über den Transistor Tnl" (in FIG 3) auf ein der Differenz
zwischen dem Inverter-Speisepotential $V_{cc}$ und der Transistor-
Schwellspannung entsprechendes Potential aufgeladen.
Geht danach das zwischen Eingangsleitung ej und Ausgangsleitung ai durchzuschaltende Signal auf seinen oberen (Grenz-)
Wert über, d.h. tritt auf der Eingangsleitung ej eine positive Signalflanke auf, so wird diese über die Gate-Source-
Kapazität des n-Kanal-Transistors Tnk zu dessen Gate-Anschluß übergekoppelt, wobei die Ausgangskapazität der Halte-Speicherzelle Hij eine kapazitive Spannungsteilung bewirkt.
Bei in C-MOS-Technik ausgeführter Halte-Speicherzelle gemäß FIG 2 bleibt dabei aber wegen des ständig niedrigen Widerstands des Transistors Tp" das Gate-Potential des n-Kanal-Transistors Tnk im wesentlichen unverändert mit der Folge, daß auf der Ausgangsleitung ai der Nutzsignalpegel so lange ansteigt, bis die Gate-Source-Spannung die Transistor-Schwellspannung unterschreitet; um ein durchzuschaltendes Signal mit vollem Signalhub durchschalten zu können, muß daher ggf. für die Halte-Speicherzelle Hij (in FIG 2) ein etwa höheres Inverter-Speisepotential $V_{cc}$ vorgesehen werden.
Bei in N-MOS-Technik ausgeführter Halte-Speicherzelle gemäß FIG 3 kommt es dagegen am Gate-Anschluß des n-Kanal-Transistors Tnk und damit zugleich an der Source-Elektrode des Lasttransistors Tnl" zu einem entsprechenden Potentialanstieg um beispielsweise etwa 3 V mit der Folge, daß die Gate-Source-Spannung des n-Kanal-Transistors Tnk nicht auf die Transistor-Schwellspannung absinkt; das durchzuschaltende Signal wird daher stets mit vollem Spannungshub durchgeschaltet.

Gleichzeitig mit dem Schließen des n-Kanal-Transistor-Schalters Kij werden (in dem im folgenden erläuterten Vorgang entsprechender Weise) die übrigen Koppelelemente der .betreffenden Koppelpunktzeile gesperrt.

Zum Öffnen des n-Kanal-Transistor-Schalters Kij wird die Halte-Speicherzelle Hij über die Zeilenansteuerleitung xi wiederum mit einem den n-Kanal-Transistor Tnh entriegelnden ("1"-)Ansteuersignal "H" beaufschlagt, über die Spaltenansteuerleitung yj nunmehr aber mit einem ("0"-)Ansteuersignal "H" mit der Folge, daß über den n-Kanal-Transistor Tnh nunmehr der Transistor Tn" in den Leitzustand gesteuert wird, während der Transistor Tn' in den Sperrzustand gelangt; über den leitenden Transistor Tn" wird dann in den Ausführungsbeispielen nach FIG 2 und FIG 3 das Masse-Potential zur Gate-Elektrode des n-Kanal-Transistors Tnk durchgeschaltet, so daß dieser Transistor nichtleitend und damit das Koppelelement Kij gesperrt wird.

Für Prüfzwecke ist es zweckmäßig, den jeweiligen Durchschaltezustand aus der Koppelpunktmatrix auch auslesen zu können. Hierzu können in den einzelnen Speicherzellen Hij (in FIG 2 und FGI 3) die jeweils einen Inverterschaltungen (Tn', Tp' in FIG 2; Tn', Tnl' in FIG 3) über den jeweils zugehörigen n-Kanal-Transistor Tnh mit tristate-fähigen Decoderausgängen yj verbunden sein.

In FIG 1 ist hierzu angedeutet, daß den Ausgängen des Spaltendecoders DY Schreibschalter WR nachgeschaltet sind, die nur bei Auftreten eines Schreibbefehls auf einer Freigabeleitung wr geschlossen sein mögen und dann das ggf. an einem Decoderausgang auftretende "1"-Ansteuersignal ("L") und die an den übrigen Decoderausgängen auftretenden "0"-Ansteuersignale ("H") niederohmig auf die einzelnen Spaltenansteuerleitungen y1,...,yj,...,yn durchschalten, so daß in der zuvor erläuterten Weise die jeweils angesteuerten Koppelelemente in den Durchschalte- bzw. Sperrzustand gelangen.

Soll dagegen der Koppelzustand einer Zeile von Koppelpunkten der Koppelpunktmatrix lediglich ausgelesen werden, wozu die betreffende Zeilenansteuerleitung, beispielsweise die Leitung xi, wiederum, wie bei einem Verbindungsaufbau oder Verbindungsabbau, mit einem "1"-Ansteuersignal ("H") beaufschlagt wird, so bleiben die Schreibschalter WR infolge Ausbleibens eines auf der Freigabeleitung wr auftretenden Schreibbefehls geöffnet mit der Folge, daß die Spalten-ansteuerleitungen y1,...,yj,..,yn vom Spaltendecoder DY her jetzt kein Steuerpotential erhalten. Über die durch das Zeilenansteuersignal "H" von ihrer Gate-Elektrode her dennoch entriegelten n-Kanal-Transistoren Tnh (in FIG 2 und FIG 3) der Halte-Speicherzellen Hij (in FIG 2 und FIG 3) der betreffenden Koppelpunktzeile ...Kpij... (in FIG 1) wird nun jeweils der an der Gate-Elektrode des Transistors Tn" (in FIG 2 und FIG 3) herrschende Signalzustand auf die jeweilige Spaltenansteuerleitung (yj in FIG 2 und FIG 3) durchgeschaltet, wobei bei fehlerfreiem Betrieb auf nicht mehr als einer Spaltenansteuerleitung y1,...,yj,...,yn (in FIG 1) ein "L"-Potential auftreten darf. Wie dies auch in FIG 1 angedeutet ist, kann die Adresse dieser Spaltenansteuerleitung und damit die Adresse des betreffenden Koppelpunktes mit Hilfe eines Coders CZ gewonnen und von diesem auf ein folgendes Register Reg Z weitergegeben werden.

Um bei einem solchen Auslesen des Durchschaltezustandes von Koppelpunktzeilen einem unerwünschten Setzen oder Rücksetzen von Halte-Speicherzellen beim Aktivieren der jeweiligen Zeilenansteuerleitung entgegenzuwirken, sind die Gate-Elektroden der n-Kanal-Transistoren Tnh (in FIG 2 und FIG 3) zweckmäßigerweise mit mit einer Zeitkonstante behafteten Decoderausgängen $x1,...,xi,...,xm$ (in FIG 1) verbunden, so daß die jeweilige Leitung langsam aktiviert wird. Hierzu kann, wie dies auch in FIG 1 angedeutet ist, in die Zeilenansteuerleitungen $x1,...,xi,...xm$ jeweils ein Längswiderstand eingefügt sein oder es kann auch der Decoderausgang selbst bereits einen hohen Innenwiderstand haben; in beiden Fällen ergibt sich in Verbindung mit der Leitungskapazität eine Tiefpaßwirkung, so daß die Aktivierung der Zeilenansteuerleitungen eine entsprechende Verlangsamung erfährt.

Wie oben bereits erwähnt wurde, kann der Spaltendecoder DY von seinem Eingangsregister Reg Y her gegebenenfalls mit einer Leeradresse oder mit der Adresse einer Spalte von eingangsseitig unbeschalteten Koppelpunkten beaufschlagt werden, um damit die Rücksetzung von Halte-Speicherzellen ...Hij... einer Koppelpunktzeile zu ermöglichen. Hierzu sei nun ergänzend bemerkt, daß, ohne daß dies in FIG 1 im einzelnen dargestellt ist, die n-Kanal-Transistoren Tnk (in FIG 2 und FIG 3) einer solchen Spalte von eingangsseitig "unbeschalteten" Koppelelementen ...Kij... (in FIG 1) mit ihrer eingangsleitungsseitigen Hauptelektrode auch an einer Quelle definierten Potentials, beispielsweise Masse, liegen können. Dies hat dann zur Folge, daß jeweils diejenigen Ausgangsleitungen ...ai..., zu denen keine Nutzsignalverbindung durchgeschaltet ist, auf einem definierten Pegel liegen, der für Prüfzwecke gegebenenfalls auch von außen beeinflußbar sein mag.

Abschließend sei noch bemerkt, daß die Koppelpunktmatrix auch mit Erweiterungseingängen versehen sein kann, an die entsprechende Ausgänge entsprechender anderer Koppelpunktmatrizen der Breitbandsignal-Raumkoppelpunkteinrichtung angeschlossen sein können. Solche Erweiterungseingänge können durch die Eingänge ...ej... der Koppelelemente ..Kij.. einer Spalte von Koppelpunkten ...KPij... gebildet sein, wobei jedoch in Abweichung von der Darstellung in FIG 1 die einzelnen Koppelelement-Eingänge ...ej... dieser Spalte nicht untereinander parallel geschaltet sind, sondern jeweils individuelle Erweiterungseingänge der Koppelpunktmatrix bilden.

Bezugszeichenliste

| | |
|---|---|
| al,...ai,...am | Koppelpunktmatrix-Ausgangsleitungen |
| CZ | Coder |
| DX | Zeilendecoder |
| DY | Spaltendecoder |
| el,...ej,...en | Koppelpunktmatrix-Eingangsleitungen |
| Hij | Halte-Speicherzelle |
| Kij | Koppelelement |
| KP11,...KPij,...KPmn | Koppelpunkte |
| RegX, RegY | Eingangsregister |
| Reg Z | Register |
| Tn', Tp'; Tp", Tn" | (C-MOS-)Inverterschaltungen |
| Tn', Tn1'; Tn", Tn1" | (N-MOS-)Inverterschaltungen; n-Kanal-Inverterschaltungen |
| Tnh | n-Kanal-Transistor |
| Tnk | " " " |
| WR | Schreibschalter |
| wr | Freigabeleitung |
| x1,...xi,...xm | Zeilen-Decoderausgänge,-Ansteuerleitungen |
| y1,...yj,...yn | Spalten- " ,- " |
| $V_{cc}$ | Speisepotential |

0238834

- 12 -

Patentansprüche

1. Breitbandsignal-Raumkoppeleinrichtung mit einer Koppelpunktmatrix in FET-Technik, deren jeweils mit einem mit
seiner Drain- Source-Strecke zwischen einer Matrix-Eingangsleitung (ej) und einer Matrix-Ausgangsleitung (ai) liegenden
n-Kanal-Transistor (Tnk) gebildete Koppelelemente jeweils
von einer durch zwei Ansteuerdecoder (Zeilendecoder (DX),
Spaltendecoder (DY)) in zwei Koordinaten angesteuerten,
koppelpunktindividuellen Speicherzelle (Hij) gesteuert
werden, die mit einem n-Kanal-Transistor (Tnh) und zwei
kreuzgekoppelten Inverterschaltungen (Tp', Tn'; Tp", Tn")
gebildet ist, wobei eine Inverterschaltung (Tp", Tn")
eingangsseitig mit dem zugehörigen Decoderausgang (yj) des
einen Ansteuerdecoders (DY) über den n-Kanal-Transistor
(Tnh) verbunden ist, der seinerseits an seiner Steuerelektrode mit dem Ausgangssignal des zugehörigen Decoderausgangs
(xi) des anderen Ansteuerdecoders (DX) beaufschlagt ist,
und wobei eine Inverterschaltung (Tp", Tn") ausgangsseitig
zum Steuereingang des zugehörigen Koppelelements (Kij) führt,
d a d u r c h   g e k e n n z e i c h n e t ,
daß nur eine (Tp", Tn") der beiden Inverterschaltungen
eingangseitig mit einem decodergesteuerten n-Kanal-Transistor
(Tnh) versehen ist und zugleich nur eine (Tp", Tn") der
beiden Inverterschaltungen ausgangsseitig mit der Gate-
Elektrode des jeweiligen mit seiner Drain-Source-Strecke
zwischen einer Matrix-Eingangsleitung (ej) und einer Matrix-
Ausgangsleitung (ai) liegenden n-Kanal-Transistors (Tnk)
des Koppelelements (Kij) über einen Längswiderstand (R)
verbunden ist.

2. Breitbandsignal-Raumkoppeleinrichtung nach Anspruch 1,
d a d u r c h   g e k e n n z e i c h n e t ,
daß das Koppelelement (Kij) einen von der Speicherzelle (Hij)
an seiner Gate-Elektrode mit einem den oberen (Grenz-)Wert
eines durchzuschaltenden Signals um mehr als die Transistor-
Pinch-Off-Spannung überschreitenden Durchschaltepotential
bzw. mit einem den durch Erhöhung des unteren (Grenz-)Werts
eines durchzuschaltenden Signals um die Transistor-Pinch-Off-
Spannung sich ergebenden Pegel unterschreitenden Sperrpotential beaufschlagten n-Kanal-Transistor (Tnk) aufweist.

3. Breitbandsignal-Raumkoppeleinrichtung nach Anspruch 1
oder 2,
d a d u r c h   g e k e n n z e i c h n e t ,
daß die Speicherzellen (Hij) jeweils mit zwei kreuzgekoppelten C-MOS-Inverterschaltungen (Tp', Tn'; Tp", Tn")
gebildet sind.

4. Breitbandsignal-Raumkoppeleinrichtung nach Anspruch 1
oder 2,
d a d u r c h   g e k e n n z e i c h n e t ,
daß die Speicherzellen (Hij) jeweils mit zwei kreuzgekoppelten n-Kanal-Inverterschaltungen (Tnl',Tn';Tnl",Tn")
gebildet sind.

5. Breitbandsignal-Raumkoppeleinrichtung nach einem der
vorhergehenden Ansprüche,
d a d u r c h   g e k e n n z e i c h n e t ,
daß die jeweils einen Inverterschaltungen (Tp', Tn') der
einzelnen Speicherzellen (Hij) über den jeweils zugehörigen
n-Kanal- Transistor (Tnh) mit tristate-fähigen Decoderausgängen (yj) verbunden sind.

6. Breitbandsignal-Raumkoppeleinrichtung nach Anspruch 5,
d a d u r c h   g e k e n n z e i c h n e t ,
daß die Gate-Elektroden der n-Kanal-Transistoren (Tnh) mit
mit einer Zeitkonstante behafteten Decoderausgängen (xi)
verbunden sind.

8. Breitbandsignal-Raumkoppeleinrichtung nach einem der
Ansprüche 2 bis 7,

d a d u r c h   g e k e n n z e i c h n e t ,

daß die n-Kanal-Transistoren (Tnk) einer Reihe (Spalte bzw.
Zeile) von Koppelelementen (Kij) mit ihrer eingangsseitigen
Hauptelektrode an einer Quelle definierten Potentials (Masse)
liegen.

1/2

FIG 1

2/2

0238834

FIG 2

FIG 3

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,X | IEEE JOURNAL OF SOLID-STATE CIRCUITS, Band SC-9, Nr. 3, Juni 1974, Seiten 142-147, New York, US; Y. OHMORI et al.: "MOS IC crosspoint switch for space division digital switching networks" * Seite 143, linke Spalte, Zeile 39 - rechte Spalte, Zeile 9 * | 1,2,4 | H 04 Q 3/52 H 03 K 17/693 |
| | --- | | |
| X | US-A-3 431 433 (BALL) * Spalte 2, Zeilen 14-31; Bild 1 * | 3 | |
| | --- | | |
| D,X | ELECTRONICS AND COMMUNICATIONS IN JAPAN, Band 53-A, Nr. 10, Oktober 1970, Seiten 54-62, Washington, US; N. KUROYANAGI: "Studies on space-division digital switching networks" * Bild 5; Seite 57, linke Spalte, Zeilen 24-50 * | 1,2,4 | RECHERCHIERTE SACHGEBIETE (Int. Cl.4) H 04 Q H 03 K |
| | --- | | |
| D,X | EP-A-0 073 920 (IBM) * Seite 14, Zeile 25 - Seite 16, Zeile 12 * | 1,2,3 | |
| | --- | | |
| A | PATENT ABSTRACTS OF JAPAN, Band 2, Nr. 90, 22. Juli 1978, Seite 4177 E 78; & JP-A-53 54 957 (NIPPON DENKI K.K.) 18.05.1978 * Zusammenfassung * | 1 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 27-04-1987 | VANDEVENNE M.J. |